# EUROPÄISCHE PATENTANMELDUNG

(11) **EP 0 983 907 A2**
(43) Veröffentlichungstag der Anmeldung: **08.03.2000**
(21) Anmeldenummer: 99117090.3
(22) Anmeldetag: 31.08.1999
(51) Int. Cl.: B60R 16/02

(54) **Vorrichtung zum Bedienen von Einrichtungen in einem Fahrzeug**

(30) Priorität: 03.09.1998 DE 19840142
(71) Anmelder: Mannesmann VDO Aktiengesellschaft, 60388 Frankfurt am Main (DE)
(72) Erfinder: Dörrie, Christian, Dipl.-Ing.(FH), 78050 Villingen-Schwenningen (DE)

(57) **Zusammenfassung**

Es wird eine Vorrichtung (1) zum Bedienen von Einrichtungen (3) in einem Fahrzeug (5) vorgeschlagen, die dadurch gekennzeichnet ist,
a) daß in einem Gehäuse mehrere Tasten (9a bis 9h) angeordnet sind,
b) daß im Gehäuse eine elektronische Schaltungsanordnung vorgesehen ist,
c) daß die Schaltungsanordnung zumindest einen Mikrocontroller (14) und eine Schnittstelle (15) für einen Datenbus besitzt, wobei die Schnittstelle (15) an einen im Fahrzeug (5) angeordneten Datenbus (4) anschließbar ist und der Mikrocontroller (14) über die Schnittstelle (15) und den im Fahrzeug (5) angeordneten Datenbus (4) mit einem im Fahrzeug (5) angeordneten zentralen Rechner (2) Daten austauschen kann,
d) daß jede Taste (9a bis 9h) bei ihrer Betätigung in der Schaltungsanordnung ein elektrisches Signal erzeugt,
e) daß die Schaltungsanordnung das bei einer Betätigung einer Taste (9a bis 9h) generierte elektrische Signal dem Mikrocontroller (14) zuführt,
f) daß der Mikrocontroller (14) das bei einer Betätigung einer Taste (9a bis 9h) generierte elektrische Signal entsprechend einer in ihm hinterlegten Codierung in Daten umsetzt und diese Daten an den im Fahrzeug (5) angeordneten zentralen Rechner (2) sendet oder durch diesen abrufbar in einem Speicher bereithält, wobei der zentrale Rechner (2) dann die Einrichtungen (3) im Fahrzeug (5) im Sinne der Betätigung der Tasten (9a bis 9h) steuert.

## Beschreibung

Die Erfindung betrifft eine Vorrichtung zum Bedienen von Einrichtungen in einem Fahrzeug.

Herkömmliche Schalter, wie sie zum Beispiel in Schalterbänken in Armaturenbrettern von Nutzfahrzeugen eingesetzt werden, besitzen eine aufwendige mechanische Konstruktion, wodurch sie zu einem recht teuren Bauteil werden. Ihre Schaltkontakte erfordern trotz einer eventuellen Vergoldung ihrer Kontaktstifte und/oder Schaltzungen einen verhältnismäßig großen Mindeststrom, um nicht zu verschmutzen. Sie sind somit nicht niederstromfähig, d. h. in dem rauhen Milieu von Nutzfahrzeugen vermögen sie Ströme von nur einigen wenigen Milliampere (z.B. <7 mA) auf Dauer nicht zuverlässig zu schalten. Oftmals werden sie eher so eingesetzt, daß sie sogar den Laststrom der mit ihnen verbundenen Einrichtung im Fahrzeug schalten, so daß für die elektrischen Kabel entsprechend große Leitungsquerschnitte vorzusehen sind. Überhaupt führt ihre Verwendung bei einer aus mehreren Schaltern bestehenden Schalterbank zu einem Kabelbaum beachtlicher Stärke, der viel Platz erfordert und erhebliches Gewicht bedeutet. Die Anzahl der für jeden Schalter erforderlichen elektrischen Anschlußleitungen steigt nochmals an, wenn durch im Schalter vorgesehene optische Anzeigemittel, wie einer Glühlampe oder LED, der Betriebszustand der geschalteten Einrichtung angezeigt werden soll. Nun zählen aber beim Ausfall von Einrichtungen in einem Fahrzeug Kontaktprobleme in Verbindung mit elektrischen Leitungen erfahrungsgemäß zu den häufigsten Störungsursachen.

Es ist die Aufgabe der vorliegenden Erfindung eine Vorrichtung zum Bedienen von Einrichtungen in einem Fahrzeug aufzuzeigen, die kostengünstig realisiert werden kann, die niederstromfähig ist und die unter den in einem Fahrzeug gegebenen Umwelt- und Betriebsbedingungen eine hohe Betriebssicherheit und Zuverlässigkeit aufweist.

Die Aufgabe wird durch die Merkmale des ersten Anspruchs gelöst. Die davon abhängigen Ansprüche zeigen vorteilhafte Weiterbildungen und Ausgestaltungen der gefundenen Lösung.

Die Lösung besteht in einer Vorrichtung zum Bedienen von Einrichtungen in einem Fahrzeug, die dadurch gekennzeichnet ist,
a) daß in einem Gehäuse mehrere Tasten angeordnet sind,
b) daß im Gehäuse eine elektronische Schaltungsanordnung vorgesehen ist,
c) daß die Schaltungsanordnung zumindest einen Mikrocontroller und eine Schnittstelle für einen Datenbus besitzt, wobei die Schnittstelle an einen im Fahrzeug angeordneten Datenbus anschließbar ist und der Mikrocontroller über die Schnittstelle und den im Fahrzeug angeordneten Datenbus mit einem im Fahrzeug angeordneten zentralen Rechner Daten austauschen kann,
d) daß jede Taste bei ihrer Betätigung in der Schaltungsanordnung ein elektrisches Signal erzeugt,
e) daß die Schaltungsanordnung das bei einer Betätigung einer Taste generierte elektrische Signal dem Mikrocontroller zuführt,
f) daß der Mikrocontroller das bei einer Betätigung einer Taste generierte elektrische Signal entsprechend einer in ihm hinterlegten Codierung in Daten umsetzt und diese Daten an den im Fahrzeug angeordneten zentralen Rechner sendet oder durch diesen abrufbar in einem Speicher bereithält, wobei der zentrale Rechner dann die Einrichtungen im Fahrzeug im Sinne der Betätigung der Tasten steuert.

Die in der Vorrichtung vorgesehene Schaltungsanordnung kann so gestaltet sein, daß sie den Anschluß noch weiterer Tasten erlaubt, die in einem zusätzlichen Gehäuse angeordnet sind. Bedarfsweise kann vorgesehen werden, die Tasten zur Erleichterung ihrer Betätigung bei Dunkelheit mit einer Suchbeleuchtung auszustatten. Ebenso kann eine Funktionsbeleuchtung vorgesehen werden, die über den Betriebszustand einer mit der Taste bedienten Einrichtung im Fahrzeug informiert. Die Tasten können kostengünstig durch eine Schaltmatte oder eine Folientastatur realisiert werden. Es ist vorteilhaft, das Gehäuse zweiteilig auszubilden, wobei die Tasten im Gehäuseoberteil angeordnet sind. Das Gehäuseoberteil kann dann derart beschriftet werden, wie es der Bedeutung der Tasten entspricht, die durch die im Mikrocontroller hinterlegte Codierung festgelegt ist. Zur Kennzeichnung der Tasten können aber auch z. B. mit Symbolen versehene Einlegeplättchen vorgesehen werden, die in Zuordnung zu den Tasten austauschbar in das Gehäuse bzw. dessen Oberteil geklemmt oder eingeschoben werden.

Anhand von 4 Figuren soll die Erfindung nun näher erläutert werden.

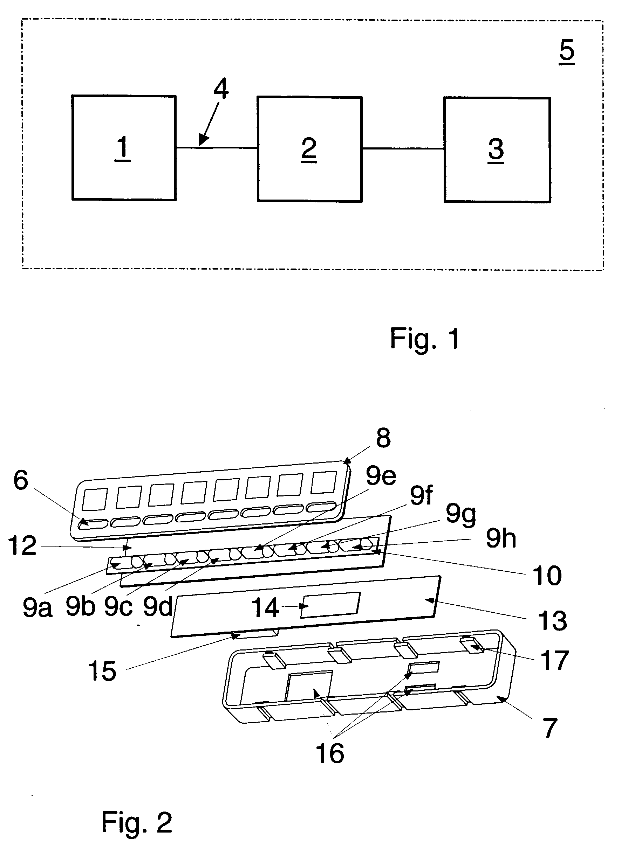

**Figur 1** zeigt anhand eines vereinfachten Blockschaltbildes die Systemstruktur, in die die erfindungsgemäße Vorrichtung 1 eingebunden ist. Die Vorrichtung 1 ist über einen im Fahrzeug 5 angeordneten Datenbus 4 mit einem ebenfalls im Fahrzeug 5 angeordneten zentralen Rechner 2 verbunden, um mit diesem Daten auszutauschen. Bei diesem Datenbus 4 kann es sich um einen CAN-Bus handeln (Control Area Network). Beim CAN-Bus reicht ein zweiadriges Kabel zum Informationsaustausch zwischen der Vorrichtung 1 und dem zentralen Rechner 2 aus. Der zentrale Rechner 2 steuert seinerseits in Abhängigkeit von den Befehlen, die er von der Vorrichtung 1 empfängt, im Fahrzeug 5 angeordnete Einrichtungen 3. Die eigentliche Zu- oder Abschaltung der Einrichtungen 3 erfolgt über Schaltelemente, die den erforderlichen Laststrom schalten und die vom zentralen Rechner 2 betätigt werden.

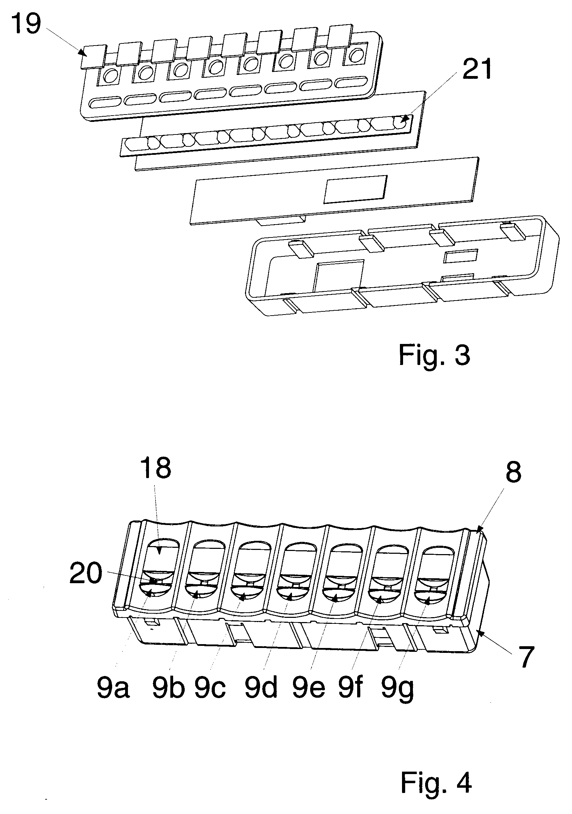

Die **Figuren 2 und 3** zeigen in einer Explosionsdarstellung den mechanischkonstruktiven Aufbau der Vorrichtung 1. Das Gehäuse der Vorrichtung 1 besteht vorzugsweise aus einem schalenförmigen Gehäuseunterteil 7 und einem deckelartigen Gehäuseoberteil 8, wobei das Gehäuseoberteil 8 Durchbrüche 6 oder Aussparungen enthält, in die die Tasten 9a bis 9h vorzugsweise einer unterlegten Schaltmatte 10, insbesondere einer Silikonschaltmatte eingreifen. Die Schaltmatte 10 wirkt ihrerseits auf eine im Gehäuse angeordnete Schaltungsanordnung ein, die auf einer oder mehreren Leiterplatten aufgebracht ist. Optional kann das Gehäuse bzw. dessen Gehäuseoberteil 8 auch so modifiziert sein, daß es mehrere (Reihen von) Schaltmatten aufnehmen kann. In dem dargestellten Beispiel sind eine Leiterplatte 12 zur Aufnahme der Schaltmatte 10 und eine Leiterplatte 13 vorgesehen, die zumindest einen Mikrocontroller 14 und eine Schnittstelle 15 für einen Datenbus 4 besitzt, wobei die Schnittstelle 15 an einen im Fahrzeug angeordneten Datenbus 4 anschließbar ist und der Mikrocontroller 14 über die Schnittstelle 15 und den im Fahrzeug 5 angeordneten Datenbus 4 mit dem im Fahrzeug 5 angeordneten zentralen Rechner 2 Daten austauschen kann. Beide Leiterplatten 12 und 13 sind z. B. über einander zugewandte Steckkontakte elektrisch miteinander verbunden. Außer den genannten Baugruppen enthält die Schaltungsanordnung in der Regel noch ein Netzteil und eine gewisse Peripheriebeschaltung für den Mikrocontroller 14. Das Gehäuseunterteil 7 enthält Durchbrüche 16, in die mit der Schaltungsanordnung in Verbindung stehende Verbindungselemente (Stecker/ Steckbuchsen) eingreifen, um daran die elektrischen Leitungen des Datenbus 4, der elektrischen Stromversorgung für die Schaltungsanordnung der Vorrichtung 1 und die Leitungen zu eventuellen weiteren Tasten anzuschließen, die in einem zusätzlichen Gehäuse angeordnet sind. Gehäuseunterteil 7 und Gehäuseoberteil 8 sind vorzugsweise so gestaltet, daß sie über entsprechend angeformte Schnapper 17 miteinander verrastbar sind.

**Figur 4** zeigt eine fertig montierte Vorrichtung 1. Das Gehäuseoberteil 8 enthält jeweils in Zuordnung zu den Tasten 9a bis 9g ein Beschriftungsfeld 18, mit dem die Bedeutung der jeweiligen Taste gekennzeichnet werden kann. Die Tasten 9a bis 9g erhalten ihre Bedeutung erst durch ein im zentralen Rechner 2 gespeichertes Programm, das die vom Mikrocontroller 14 bereitgestellten Daten mit Bezug auf eine der im Fahrzeug 5 vorhandenen Einrichtungen 3 interpretiert. Die im Mikrocontroller 14 hinterlegte Codierung wandelt die durch die Betätigung einer Taste generierten elektrischen Signal zunächst nur in busfähige Daten, wobei diese Signalwandlung unabhängig von der Bedeutung erfolgt, die die Taste für eine der Einrichtungen 3 hat. Damit ist die Zuordnung von Bedeutungsinhalten zu den Tasten sehr flexibel, denn es ist nur durch ein im zentralen Rechner 2 leicht änderbares und austauschbares Programm festgelegt, welche Taste der Vorrichtung 1 zum Bedienen einer bestimmten vom zentralen Rechner 2 steuerbaren Einrichtung 3 vorgesehen ist. Die Kennzeichnung der Tasten kann beispielsweise dadurch erfolgen, daß auf den Beschriftungsfeldern 18 Symbole z. B. mittels Laser graviert werden oder es werden Einlegeplättchen vorgesehen, die in das Gehäuseoberteil 8 eingeklemmt oder eingeschoben werden. Durch austauschbare Einlegeplättchen 19 ― wie in der **Figur 3** gezeigt - besteht die Möglichkeit, bei einer Veränderung des im zentralen Rechners 2 hinterlegten Programms die Zuordnung der Tasten 9a bis 9g zu bestimmten Einrichtungen 3 im Fahrzeug 5 auf einfache und kostengünstige Weise anzupassen. Gerade bei Verwendung einer Schaltmatte ist es vorteilhaft, jede Taste 9a bis 9g mit einer Funktionsbeleuchtung 20 auszustatten, um den Betriebszustand einer mit der Taste bedienten Einrichtung 3 im Fahrzeug anzuzeigen. Die Funktionsbeleuchtung 20 kann dabei durch LEDs 21 realisiert werden, die den Tasten jeweils zugeordnet sind. Um die Bedienung der Tasten 9a bis 9g bei Dunkelheit zu erleichtern, kann eine Nacht- bzw. Suchbeleuchtung der Tasten vorgesehen werden, indem das Gehäuseoberteil 8 z. B. als transparenter Lichtleiter ausgebildet wird, wobei die dem Benutzer zugewandte Seite des Gehäuseoberteiles 8 entsprechend den gestalterischen Erfordernissen lackiert ist. Optional kann eine Dimmung der Suchbeleuchtung wie auch der Funktionsbeleuchtung 20 vorgesehen werden.

Die Integration mehrerer Tasten in einem einzigen Gehäuse bei gleichzeitiger Aufbereitung der durch ihre Betätigung entstehenden elektrischen Signale durch einen im Gehäuse vorgesehenen Mikrocontroller zu busfähigen Daten führt zu einer Vorrichtung zum Bedienen von Einrichtungen in einem Fahrzeug, die kostengünstig realisiert werden kann, die niederstromfähig ist und die unter den in einem Fahrzeug gegebenen Umwelt- und Betriebsbedingungen eine hohe Betriebssicherheit und Zuverlässigkeit aufweist. Der im Armaturenbrett des Fahrzeugs vorzusehene Kabelbaum kann dadurch drastisch vereinfacht werden, was zu Platz- und Gewichtsvorteilen führt.

## Patentansprüche

1. Vorrichtung (1) zum Bedienen von Einrichtungen (3) in einem Fahrzeug (5),
**dadurch gekennzeichnet**,
a) daß in einem Gehäuse mehrere Tasten (9a bis 9h) angeordnet sind,
b) daß im Gehäuse eine elektronische Schaltungsanordnung vorgesehen ist,
c) daß die Schaltungsanordnung zumindest einen Mikrocontroller (14) und eine Schnittstelle (15) für einen Datenbus besitzt, wobei die Schnittstelle (15) an einen im Fahrzeug (5) angeordneten Datenbus (4) anschließbar ist und der Mikrocontroller (14) über die Schnittstelle (15) und den im Fahrzeug (5) angeordneten Datenbus (4) mit einem im Fahrzeug (5) angeordneten zentralen Rechner (2) Daten austauschen kann,
d) daß jede Taste (9a bis 9h) bei ihrer Betätigung in der Schaltungsänordnung ein elektrisches Signal erzeugt,
e) daß die Schaltungsanordnung das bei einer Betätigung einer Taste (9a bis 9h) generierte elektrische Signal dem Mikrocontroller (14) zuführt,
f) daß der Mikrocontroller (14) das bei einer Betätigung einer Taste (9a bis 9h) generierte elektrische Signal entsprechend einer in ihm hinterlegten Codierung in Daten umsetzt und diese Daten an den im Fahrzeug (5) angeordneten zentralen Rechner (2) sendet oder durch diesen abrufbar in einem Speicher bereithält, wobei der zentrale Rechner (2) dann die Einrichtungen (3) im Fahrzeug (5) im Sinne der Betätigung der Tasten (9a bis 9h) steuert.

2. Vorrichtung nach einem der vorangegangenen Ansprüche, **dadurch gekennzeichnet**, daß die Schaltungsanordnung den Anschluß noch weiterer Tasten erlaubt, die in einem zusätzlichen Gehäuse angeordnet sind.

3. Vorrichtung nach einem der vorangegangenen Ansprüche, **dadurch gekennzeichnet**, daß die Tasten (9a bis 9h) zur Erleichterung ihrer Betätigung bei Dunkelheit mit einer Suchbeleuchtung ausgestattet sind.

4. Vorrichtung nach einem der vorangegangenen Ansprüche, **dadurch gekennzeichnet**, daß die Tasten (9a bis 9h) mit einer Funktionsbeleuchtung (20) ausgestattet sind, die über den Betriebszustand einer mit der Taste bedienten Einrichtung (3) im Fahrzeug (5) informiert.

5. Vorrichtung nach einem der vorangegangenen Ansprüche, **dadurch gekennzeichnet**, daß die Tasten (9a bis 9h) durch eine Schaltmatte oder eine Folientastatur realisiert sind.

6. Vorrichtung nach einem der vorangegangenen Ansprüche, **dadurch gekennzeichnet**, daß das Gehäuse aus einem Gehäuseunterteil (7) und einem Gehäuseoberteil (8) ausgebildet ist, wobei die Tasten (9a bis 9h) im Gehäuseoberteil (8) angeordnet sind.

7. Vorrichtung nach einem der vorangegangenen Ansprüche, **dadurch gekennzeichnet**, daß das Gehäuseoberteil (8) für die Tasten (9a bis 9h) eine Kennzeichnung aufweist, die deren Bedeutung angibt, welche durch ein im zentralen Rechner (2) hinterlegtes Programm festgelegt ist.

8. Vorrichtung nach Anspruch 7, **dadurch gekennzeichnet**, daß die Kennzeichnung der Tasten (9a bis 9h) durch Beschriftung erfolgt.

9. Vorrichtung nach Anspruch 7, **dadurch gekennzeichnet**, daß die Kennzeichnung der Tasten (9a bis 9h) durch Einlegeplättchen (19) erfolgt, die in Zuordnung zu den Tasten (9a bis 9h) austauschbar in das Gehäuse bzw. das Gehäuseoberteil (8) geklemmt oder eingeschoben werden.
